# EUROPEAN PATENT APPLICATION

(11) **EP 3 926 723 A1**
(43) Date of publication of application: **22.12.2021**
(21) Application number: 20778114.7
(22) Date of filing: 24.03.2020
(51) Int. Cl.: H01M 10/04, H01M 2/16, H01M 2/26

(54) **ELECTRODE ASSEMBLY, LAMINATION DEVICE FOR MANUFACTURING SAME ELECTRODE ASSEMBLY, AND METHOD FOR MANUFACTURING SAME ELECTRODE ASSEMBLY**

(30) Priority: 26.03.2019 KR 20190034559
(71) Applicant: LG ENERGY SOLUTION, LTD., Seoul 07335 (KR)
(72) Inventor: SHIM, Hong Seok, Daejeon 34122 (KR); KIM, Yoong, Daejeon 34122 (KR)
(74) Representative: Plasseraud IP
(86) International application number: PCT/KR2020/004016
(87) International publication number: WO 2020/197246

(57) **Abstract**

The present invention relates to an electrode assembly in which a bonding area of an electrode is minimized to reduce defects that may occur in a process, a lamination device for manufacturing the electrode assembly, and a method for manufacturing the electrode assembly.

In addition, the present invention comprises at least one or more radical units, each of which comprises a plurality of electrodes and separators and a sealing part in which both ends of each of the plurality of electrodes and each of the plurality of separators are bonded to each other.

## Description

### CROSS-REFERENCE TO RELATED APPLICATION

The present application claims the benefit of the priority of Korean Patent Application No. 10-2019-0034559, filed on March 26, 2019, which is hereby incorporated by reference in its entirety.

### TECHNICAL FIELD

The present invention relates to an electrode assembly, a lamination device for manufacturing the electrode assembly, and a method for manufacturing the electrode assembly, and more particularly, to an electrode assembly in which a bonding area of an electrode is minimized to reduce defects that may occur in processes, a lamination device for manufacturing the electrode assembly, and a method for manufacturing the electrode assembly.

### BACKGROUND ART

Secondary batteries may be variously classified according to a structure of an electrode assembly. For example, the secondary batteries may be classified into a stack type structure, a jelly-roll-type structure, or a stack/folding type structure. However, in the stack type structure, since electrode units (a positive electrode, a separator, and a negative electrode) constituting the electrode assembly are stacked separately from each other, it is very difficult to precisely align the electrode assembly, and also, there is a disadvantage in that very many processes are required to produce the electrode assembly. Also, since the stack/folding type structure generally requires two lamination equipment and one folding equipment, there is a disadvantage in that a process of manufacturing the electrode assembly is very complicated. Particularly, since a full cell or a bicell is stacked through folding, the stack/folding type structure has a disadvantage in that it is difficult to precisely align the full cell or the bicell.

A laminating device for a secondary battery and a method for laminating the secondary battery according to the related art are disclosed in Korea Patent Publication No. 10-2016-0040087.

Currently, in a polymer battery assembly process, an entire area of the electrode is bonded using heat and a pressure between positive electrode-separator-negative electrode to produce the electrode assembly. Here, convective heat is used as the used heat source, and the bonding is substantially performed through a pressure of a roller.

However, as the battery increases in thickness, process properties of bonding of the electrodes are not satisfied due to a limited time. Also, as the separator decreases in thickness so as to secure capacity of the battery, an internal pressure may be reduced by the heat and the pressure for the electrode bonding to deteriorate performance of the battery and cause a low voltage.

### DISCLOSURE OF THE INVENTION

### TECHNICAL PROBLEM

Therefore, the present invention has been devised to solve the above problems, and an object of the present invention is to provide an electrode assembly, in which an internal pressure applied to a separator is minimized to minimize damage of separators while lamination and stacking processes, in which electrodes and the separators are stacked to be bonded to each other, a lamination device for manufacturing the electrode assembly, and a method for manufacturing the electrode assembly.

### TECHNICAL SOLUTION

An electrode assembly according to an embodiment of the present invention comprises at least one or more radical units, each of which comprises a plurality of electrodes and separators and a sealing part in which both ends of each of the plurality of electrodes and each of the plurality of separators are bonded to each other.

The sealing part of each of the radical units may be provided at a side of the electrode on which an electrode tab is disposed.

A coating material in which ceramics and a binder are mixed may be applied to only a portion corresponding to the sealing part on the separator of the radical unit.

A lamination device for manufacturing an electrode assembly according to an embodiment of the present invention comprises a transfer unit configured to transfer an electrode stack, in which the plurality of electrodes and a rectangular separator having a length longer than a width thereof are alternately stacked, and a sealing unit configured to press and seal both ends (edges) of the electrode stack transferred by the transfer unit.

The sealing unit may press and seal both the ends of the electrode stack through spinning.

The sealing unit may be constituted by a pair of rollers that are independent from each other, and the pair of rollers may press and seal only both the ends of the electrode stack, respectively.

A method for manufacturing an electrode assembly according to an embodiment of the present invention comprises a preparation step of preparing a plurality of electrodes and a rectangular separator having a length longer than a width thereof, a stacking step of stacking the plurality of electrodes on the separator, wherein the plurality of electrodes are stacked on the separator so as to be arranged at predetermined intervals in a direction of the length of the rectangular separator, a sealing step of pressing and sealing each of both ends of an electrode stack by using a sealing unit.

The method may further comprise, after the sealing step, a cutting step of cutting the separator to correspond to the electrodes stacked on the separator so as to manufacture a radical unit.

The method may further comprise a unit stack formation step of stacking the plurality of radical units in a manner, in which one cut radical unit that is cut in the cutting step is stacked on the other radical unit, to manufacture a unit stack.

The method may further comprise an SRS coating step of applying a coating material, in which ceramics and a binder are mixed, to both ends of the separator that is to be sealed after the preparation step.

### ADVANTAGEOUS EFFECTS

According to the present invention, there is the effect of alleviating the damage of the electrode, which may occur during the assembly process, by forming the sealing part for bonding the electrode and the separator of the radical unit only at both the ends.

In addition, there is the effect of improving the wetting of the non-sealing part by forming the sealing part of the radial unit at both the ends.

In addition, there is the effect of reducing the cost and preventing the resistance from increasing because the SRS coating is performed only on the sealing part in the separator of the radical unit.

According to the present invention, there is the effect of minimizing the deformation of the separator because both the ends are pressed with the linear pressure so as to be sealed while the radical unit is sealed.

### BRIEF DESCRIPTION OF THE DRAWINGS

FIG. 1 is a side view illustrating a first structure of a radical unit of an electrode assembly according to a first embodiment of the present invention.
FIG. 2 is a plan view of FIG. 1 when viewed on a plane.
FIG. 3 is a plan view illustrating a radical unit of an electrode assembly when viewed on a plane according to a related art.
FIG. 4 is a side view illustrating a second structure of a radical unit of an electrode assembly according to a second embodiment of the present invention.
FIG. 5 is a side view of a unit stack formed by stacking the radical units of FIG. 1.
FIG. 6 is a side view illustrating a third structure of a radical unit of an electrode assembly according to a third embodiment of the present invention.
FIG. 7 is a side view illustrating a fourth structure of a radical unit of an electrode assembly according to a fourth embodiment of the present invention.
FIG. 8 is a side view illustrating a unit stack formed by stacking the radical unit of FIG. 6 and the radical unit of FIG. 7.
FIG. 9 is a schematic perspective view illustrating a main part of a lamination device for manufacturing the electrode assembly according to the first embodiment of the present invention.
FIG. 10 is a plan view of FIG. 9 when viewed on the plane.
FIG. 11 is a flowchart sequentially illustrating a method for manufacturing an electrode assembly according to the first embodiment of the present invention.

### MODE FOR CARRYING OUT THE INVENTION

Hereinafter, an electrode assembly, a lamination device for manufacturing the electrode assembly, and a method for manufacturing the electrode assembly according to preferred embodiments of the present invention will be described in detail with reference to the accompanying drawings.

Terms or words used in the specification and claims should not be construed as limited to a lexical meaning, and should be understood as appropriate notions by the inventor based on that he/she is able to define terms to describe his/her invention in the best way to be seen by others. Therefore, embodiments and drawings described herein are simply exemplary and not exhaustive, and it will be understood that various equivalents may be made to take the place of the embodiments.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be ruled out in order not to unnecessarily obscure subject matters of the present invention.

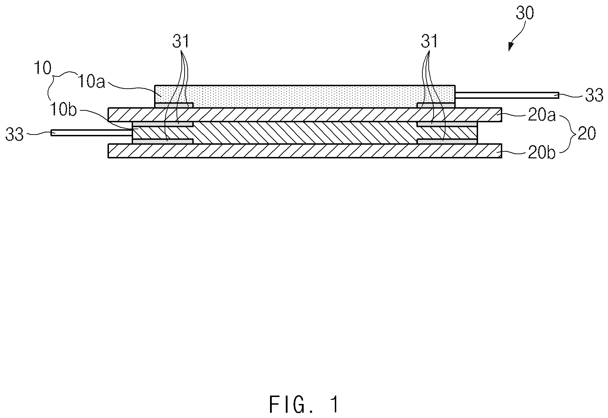

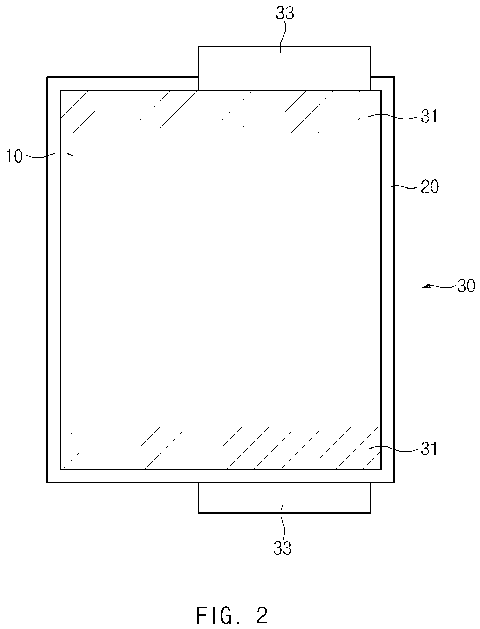

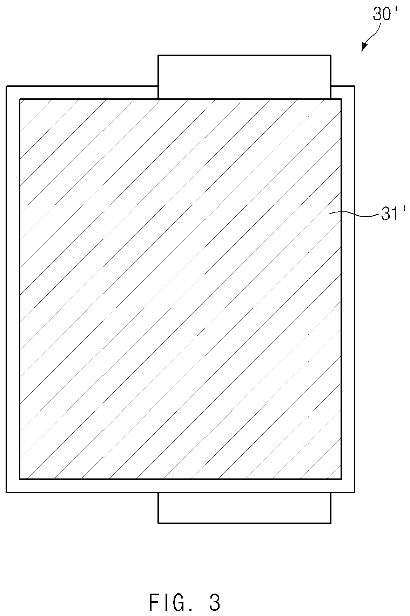

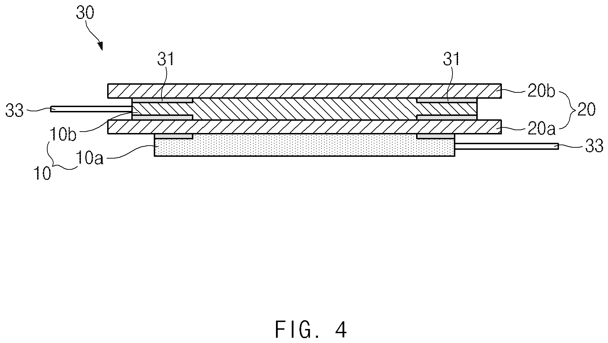

FIG. 1 is a side view illustrating a first structure of a radical unit of an electrode assembly according to a first embodiment of the present invention, FIG. 2 is a plan view of FIG. 1 when viewed on a plane, FIG. 3 is a plan view illustrating a radical unit of an electrode assembly when viewed on a plane according to a related art, and FIG. 4 is a side view illustrating a second structure of a radical unit of an electrode assembly according to a second embodiment of the present invention.

As illustrated in FIG. 1, an electrode assembly according to a first embodiment of the present invention comprises at least one or more radical units 30, each of which comprises a plurality of electrodes 10 and separators 20 and a sealing part 31 formed by bonding both ends of each of the plurality of electrodes 10 and each of the plurality of separators 20.

The sealing part 31 may be formed on both ends of the electrode 10, on which an electrode tab 33 is disposed, at both ends of the radical unit 30. The electrode tab 33 of the electrode 10 may be a portion connected to an external terminal, and a portion of the electrode 10, on which the electrode tab 33 is disposed, may need to be fixed to the separator 20.

A binder for the bonding to the electrode 10 may be applied to the separator 20. In the present invention, a coating material in which a binder and ceramics are mixed may be applied to the separator 20 to perform safety reinforced separator (SRS) coating.

In the SRS coating, the coating material in which the binder and the ceramic material are mixed may be thinly applied to a surface of the separator to enhance safety and performance of the radical unit 30.

In the present invention, particularly, the coating material in which the binder and the ceramics are mixed may be applied only to the sealing part 31 to prevent the radical unit 30 from being physically twisted and reduce costs and also secure the safety that is an advantage of the SRS coating.

FIG. 3 is a plan view illustrating a radical unit of an electrode assembly when viewed on a plane according to a related art.

As illustrated in FIG. 3, a radical unit 30' of an electrode assembly according to a related art may comprise a sealing part 31 on which a binder is applied to contact an entire surface on which an electrode and a separator contact each other.

The electrode assembly according to the related art has a problem in that an output decreases by resistance due to the binder applied to the entire surface on which the electrode and the separator contact each other.

### [Structure of radical unit]

In the electrode assembly according to the present invention, the radical unit 30 is characterized in that the electrodes and the separators are alternately stacked, and the sealing part, at which the electrode and the separator are bonded to each other, is formed on only each of both ends. Here, the same number of electrodes and separators are arranged. For example, as illustrated in FIG. 1, the radical unit 30 may be formed by stacking two electrodes 10a and 10b and two separators 20a and 20b. Here, the positive electrode and the negative electrode may naturally face each other through the separator. When the radical unit is formed as described above, the electrode (see reference number 10a in FIG. 1) is disposed at an end of one side of the radical unit, and the separator (see reference number 20b in FIG. 1) is disposed at an end of the other side of the radical unit.

In the electrode assembly according to the present invention, the unit stack (i.e., the electrode assembly) may be formed by only stacking the radical units. That is, in the present invention, one type of radical unit may be repeatedly stacked, or two types of radical units may be stacked in a predetermined order to form the unit stack. In order to implement this feature, the radical unit may have the following structure.

First, the radical unit may be formed by sequentially stacking a first electrode, a first separator, a second electrode, and a second separator. In more detail, the radical unit 30 may be formed by sequentially stacking the first electrode 10a, the first separator 20a, the second electrode 10b, and the second separator 20b downward as illustrated in FIG. 1 or sequentially stacking the first electrode 10a, the first separator 20a, the second electrode 10b, and the second separator 20b upward as illustrated in FIG. 4. Hereinafter, the radical unit having the above-described structure is referred to as a first radical unit. Here, the first electrode 10a and the second electrode 10b are electrodes opposite to each other. For example, if the first electrode 10a is a positive electrode, the second electrode 10b is a negative electrode.

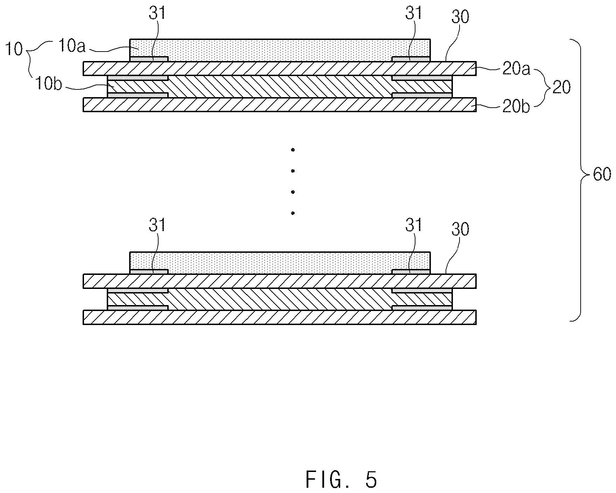

FIG. 5 is a side view of the unit stack formed by stacking the radical units of FIG. 1.

As described above, when the first electrode, the first separator, the second electrode, and the second separator are sequentially stacked to form the radical unit, as illustrated in FIG. 5, only one type of radical unit 30 may be repeatedly stacked to form the unit stack 60. Here, the radical unit may have an 8-layered structure or a 12-layered structure in addition to the 4-layered structure. That is, the radical unit may have a structure in which the 4-layered structure is repeatedly stacked. For example, the radical unit may be formed by sequentially stacking the first electrode, the first separator, the second electrode, the second separator, the first electrode, the first separator, the second electrode, and the second separator.

Second, the radical unit may be formed sequentially stacking the first electrode, the first separator, the second electrode, the second separator, the first electrode, and the first separator or sequentially stacking the second electrode, the second separator, the first electrode, the first separator, the second electrode, and the second separator. Hereinafter, the radical unit having the former structure is referred to as a second radial unit, and the radical unit having the latter structure is referred to as a third radical unit.

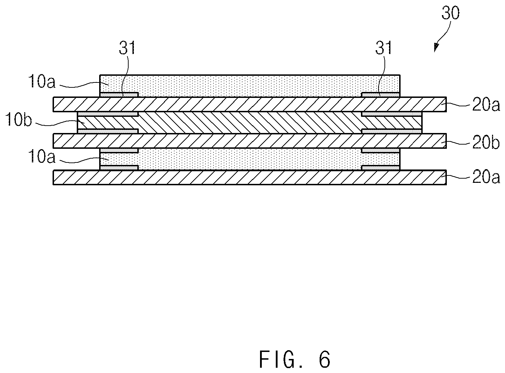

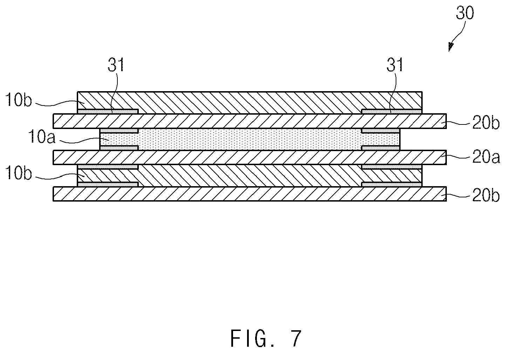

FIG. 6 is a side view illustrating a third structure of a radical unit of an electrode assembly according to a third embodiment of the present invention, and FIG. 7 is a side view illustrating a fourth structure of a radical unit of an electrode assembly according to a fourth embodiment of the present invention.

More specifically, as illustrated in FIG. 6, a second radical unit 30a may be formed by sequentially stacking a first electrode 10a, a first separator 20a, a second electrode 10b, a second separator 20b, a first electrode 10a, and a first separator 20a downward. Alternatively, as illustrated in FIG. 7, a third radical unit 30b may be formed by sequentially stacking a second electrode 10b, a second separator 20b, a first electrode 10a, a first separator 20a, a second electrode 10b, and a second separator 20b downward. On the other hand, each of the second radical unit 30a and the third radical unit 30b may be formed by stacking the above-described electrodes and the separators upward.

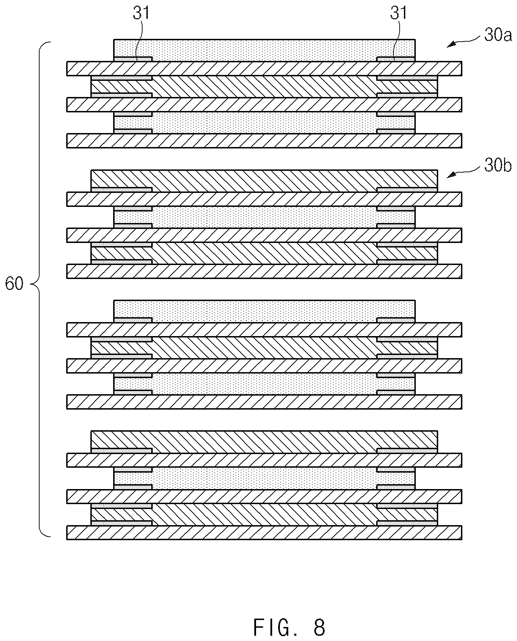

FIG. 8 is a side view illustrating a unit stack formed by stacking the radical unit of FIG. 6 and the radical unit of FIG. 7.

When only the second radical unit 30a and the third radical unit 30b are stacked one by one, the 4-layered structure is repeatedly stacked. Thus, when the second radical unit 30a and the third radical unit 30b are continuously sequentially stacked one by one, as illustrated in FIG. 8, the second and third radical units may be stacked only to form a unit stack 60.

As described above, in the present invention, one type of radical unit may have the 4-layered structure in which the first electrode, the first separator, the second electrode, and the second separator are sequentially disposed. Also, in the present invention, two or more types of radical units are disposed one by one in a predetermined order, the 4-layered structure or the structure in which the 4-layered structure is repeatedly arranged may be formed.

For example, the above-described first radical unit may have the 4-layered structure. When the above-described second and third radical units are stacked one by one to form total two layers, a 12-layered structure in which the 4-layered structure is repeatedly stacked may be formed.

In the present invention, when one type of radical unit is repeatedly stacked, or two types of radical units are stacked in a predetermined order, the unit stack (i.e., the electrode assembly) may be formed through only the stacking.

In the present invention, the unit stack is formed by stacking the radical units in a unit of the radical unit. That is, the radical unit is manufactured first, and then, the radical unit is repeatedly stacked, or the radical units are stacked in a predetermined order to manufacture the unit stack. As described above, in the present invention, the radical units may be stacked only to form the unit stack. Thus, in the present invention, the radical units may be precisely aligned (i.e., a degree of alignment is improved). When the radical units are precisely aligned, the electrodes and the separators may also be precisely aligned in the unit stack. In addition, in the present invention, the unit stack (the electrode assembly) may be very improved in productivity. This is because the process is very simple.

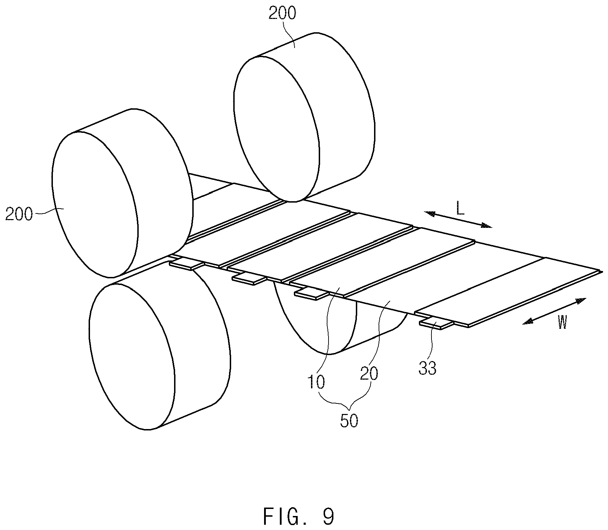

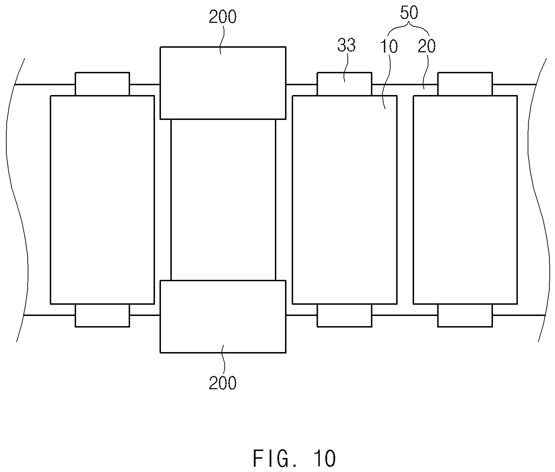

FIG. 9 is a schematic perspective view illustrating a main part of a lamination device for manufacturing the electrode assembly according to the first embodiment of the present invention, and FIG. 10 is a plan view of FIG. 9 when viewed on the plane.

As illustrated in FIGS. 9 and 10, a lamination device for manufacturing the electrode assembly according to the first embodiment of the present invention comprise a transfer unit (not shown) transferring an electrode stack 50, in which a plurality of electrodes 10 and a rectangular separator 20 having a length L longer than a width W thereof are alternately stacked, and a sealing unit 200 pressing and sealing both ends (edges) of the electrode stack 50 transferred by the transfer unit. The transfer unit may use, for example, a conveyor.

The sealing unit 200 may be sealed by pressing each of both the ends of the electrode assembly through spinning.

In one embodiment, the sealing unit 200 is constituted by a pair of rollers that are independent from each other, and the pair of rollers may press and seal only both the ends of the electrode stack 50, respectively.

The sealing unit 200 of the present invention may not press the entire electrode 10 so as to be sealed with the separator 20 but press and seal both the ends of the electrode 10, particularly, only both the ends of the electrode 10, on which the electrode tab 33 is formed.

As described above, the sealing unit 200 of the present invention may press and seal only both the ends of the electrode stack 50 through the spinning to prevent the radical unit 30 formed by cutting the electrode stack 50 in units of the electrodes 10 from being physically twisted.

In addition, the sealing unit 200 of the present invention may reduce a bonding area of the electrode 10 to perform a bonding process on the small area in concentration, thereby minimizing bonding defects that may occur in the process. In addition, the sealing unit 200 of the present invention may minimize deformation of the separator 20 when the sealing process of the electrode stack 50 is performed to remove causes such as short circuit, which may occur due to the deformation of the separator 20.

Hereinafter, a method for manufacturing the electrode assembly according to an embodiment of the present invention will be described in detail with reference to the accompanying drawings.

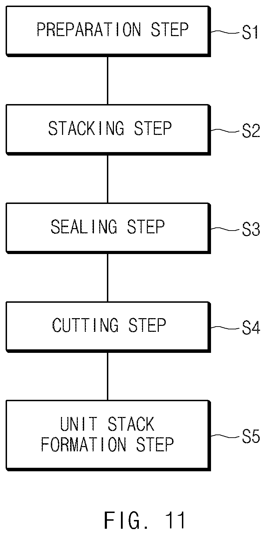

FIG. 11 is a flowchart sequentially illustrating a method for manufacturing the electrode assembly according to the first embodiment of the present invention.

As illustrated in FIG. 1, a method for manufacturing the electrode assembly according to the first embodiment of the present invention comprises a preparation step (S1), a stacking step (S2), and a sealing step (S3).

Referring to FIG. 9, the preparation step (S1) may be a step of preparing a plurality of electrodes 10 and a rectangular separator 20 having a length L longer than a width W thereof.

After the preparation step (S1), an SRS coating step of applying a coating material, in which ceramics and a binder are mixed, to only both ends of the separator 20, which is prepared in the preparation step (S1), in a direction of the width W may be further performed.

As described above, since the coating material is applied to only both the ends of the separator 20 in the direction of the width W, there is an effect of reducing cost.

The stacking step (S2) may be a step of stacking the plurality of electrodes 10 on the separator 20. In this case, the plurality of electrodes 10 may be stacked on the separator 20 so as to be arranged at predetermined intervals in the direction of the length L of the rectangular separator 20.

In the stacking step (S2), the plurality of electrodes 10 may be stacked one by one on the separator 20 while the rectangular separator 20 moves in the direction of the length L.

In the stacking step (S2), both the ends of the electrode 10 may be stacked on a portion coated with the coating material, in which the ceramics and the binder are mixed, at both the ends in the direction of the width W of the separator 20.

The sealing step (S3) may be a step of pressing and sealing each of only both ends of an electrode stack 50, on which both the ends of the electrode 10 are stacked, at the portion coated with the coating material, in which the ceramics and the binder are mixed, on both the ends of the separator 20 in the direction of the width W through a sealing unit 200.

As described above, since only the both the ends of the electrodes 10 stacked on the separator 20 are pressed and sealed, the contact area of the electrode 10 may be reduced in the sealing step (S3) to perform the bonding process on the small area in concentration, thereby minimizing the bonding defects that may occur in the process.

In addition, in the sealing step (S3), since only the both ends of the separator 20 are pressed, the deformation of the separator 20 may be minimized to prevent the defects such as the short circuit due to the deformation of the separator from occurring.

In addition, in the sealing step (S3) of the present invention, the area on which the electrode 10 and the separator 20 are bonded may be reduced, and thus, an area on which the bonding is not performed may increase. Thus, an electrolyte may be wetted on the area on which the bonding is not performed to increase in wetting of the electrolyte, thereby improving performance of the battery.

After the sealing step (S3), a cutting step (S4) of cutting the separator 20 to correspond to the electrodes 10 stacked on the separator 20 so as to manufacture a radical unit 30 may be further performed.

In addition, in the cutting step (S4), a unit stack formation step (S5) of stacking the plurality of radical units 30 in a manner, in which one cut radical unit 30 is stacked on the other radical unit 30, to manufacture a unit stack 60 may be further performed.

As described above, according to the present invention, there is the effect of alleviating the damage of the electrode, which may occur during the assembly process, by forming the sealing part for bonding the electrode and the separator of the radical unit only at both the ends.

In addition, there is the effect of improving the wetting of the non-sealing part by forming the sealing part of the radial unit at both the ends.

In addition, there is the effect of reducing the cost and preventing the resistance from increasing because the SRS coating is performed only on both the sealing parts in the separator of the radical unit.

According to the present invention, there is the effect of minimizing the deformation of the separator because both the ends are pressed with the linear pressure so as to be sealed while the radical unit is sealed.

Although the electrode assembly, the lamination device for manufacturing the electrode assembly, and the method for manufacturing the electrode assembly according to the present invention has been described above with reference to the exemplary drawings, various changes and modifications may be made thereto by one skilled in the art without departing from the scope and spirit of the invention as set forth in the appended claims.

## Claims

1. An electrode assembly comprising at least one or more radical units (30), each of which comprises:
a plurality of electrodes (10) and separators (20); and
a sealing part (31) in which both ends of each of the plurality of electrodes (10) and each of the plurality of separators (20) are bonded to each other.

2. The electrode assembly of claim 1, wherein the sealing part (31) of each of the radical units (30) is provided at a side of the electrode (10) on which an electrode tab (33) is disposed.

3. The electrode assembly of claim 1, wherein a coating material in which ceramics and a binder are mixed is applied to only a portion corresponding to the sealing part (31) on the separator (20) of the radical unit (30).

4. A lamination device for manufacturing an electrode assembly, comprising:
a transfer unit configured to transfer an electrode stack (50), in which the plurality of electrodes (10) and a rectangular separator (20) having a length longer than a width thereof are alternately stacked; and
a sealing unit (200) configured to press and seal both ends (edges) of the electrode stack (50) transferred by the transfer unit.

5. The lamination device of claim 4, wherein the sealing unit (200) presses and seals both the ends of the electrode stack (50) through spinning.

6. The lamination device of claim 4 or 5, wherein the sealing unit (200) is constituted by a pair of rollers that are independent from each other, and
the pair of rollers press and seal only both the ends of the electrode stack (50), respectively.

7. A method for manufacturing an electrode assembly, the method comprising:
a preparation step (S1) of preparing a plurality of electrodes (10) and a rectangular separator (20) having a length longer than a width thereof;
a stacking step (S2) of stacking the plurality of electrodes (20) on the separator (20), wherein the plurality of electrodes (10) are stacked on the separator (20) so as to be arranged at predetermined intervals in a direction of the length of the rectangular separator (20); and
a sealing step (S3) of pressing and sealing each of both ends of an electrode stack (50) by using a sealing unit (200) .

8. The method of claim 7, further comprising, after the sealing step (S3), a cutting step (S4) of cutting the separator (20) to correspond to the electrodes (10) stacked on the separator (20) so as to manufacture a radical unit (30).

9. The method of claim 8, further comprising, after the cutting step (S4), a unit stack formation step (S5) of stacking the plurality of radical units (30) in a manner, in which one cut radical unit (30) is stacked on the other radical unit (30), to manufacture a unit stack (60).

10. The method of claim 7, further comprising an SRS coating step of applying a coating material, in which ceramics and a binder are mixed, to both ends of the separator (20) that is to be sealed after the preparation step (S1).
